# EUROPÄISCHE PATENTSCHRIFT

(11) **EP 2 298 672 B1**
(45) Veröffentlichungstag und Bekanntmachung des Hinweises auf die Patenterteilung: **06.05.2015**
(21) Anmeldenummer: 10172482.1
(22) Anmeldetag: 11.08.2010
(51) Int. Cl.: B65G 39/06

(54) **Schwingungsarmer Tragrollenmantel**
Supporting roller sleeve for reduced vibration
Jupe de rouleau de support à faible vibration

(30) Priorität: 21.09.2009 DE 202009012644 U
(43) Veröffentlichungstag der Anmeldung: 23.03.2011
(73) Patentinhaber: Artur Küpper GmbH & Co. KG, 42553 Velbert (DE)
(72) Erfinder: Schwandtke, Rolf, 42549 Velbert (DE); Gladysiewicz, Adam, 46238 Bottrop (DE)
(74) Vertreter: Viering, Jentschura & Partner Patent- und Rechtsanwälte

(56) Entgegenhaltungen:
- EP-A1- 0 590 561
- WO-A2-2005/080236
- AT-B- 388 718
- US-A- 4 312 444
- US-A- 5 091 027

## Beschreibung

Die Erfindung richtet sich auf eine Tragrolle umfassend einen einen Tragrollenmantel mit zwei endseitig angeordneten Rollennaben und einer zwischen diesen innenseitig an der Rollenmantelinnenfläche anliegend angeordneten, hohlzylinderförmigen Dämpfungsschicht aufweisenden Rollenhohlkörper.

Derartige Tragrollen finden als drehbare Elemente von Fördergängen oder Förderbandanlagen Verwendung. Aufgrund ihres relativ geringen Gewichtes lassen sie sich gut beschleunigen und gleichmäßig rotieren. Nachteilig an diesen Rollen ist, dass der Rollenhohlkörper einen Resonanzkörper ausbildet. Dieser Resonanzkörper wird durch die auf einer solchen Rolle transportierten oder bewegten Güter oder auf einem von der Tragrolle getragenen Förderband derart in Schwingungen versetzt, dass von der Tragrolle für den Menschen hörbare Schallemissionen ausgehen. Um diese Schwingungen und Schallemissionen zu mindern, ist es bekannt, in dem Rollenhohlkörper schwingungsdämpfendes Material anzuordnen, um damit insbesondere die Eigenschwingungen der Tragrolle zu vermindern. In der DE 200 03 777 U1 wird daher eine Tragrolle vorgeschlagen, die einen von einem Rollenmantel umgebenen Rollenhohlkörper offenbart, der an seinen gegenüberliegenden stirnseitigen Enden mittels jeweils eines eine Rollennabe ausbildenden Bodens verschlossen ist. Die Böden weisen jeweils mittig einen Achsstumpf, der längs der Mittellängsachse der Tragrolle verläuft, auf. Um die Eigenschwingungen der Tragrolle zu dämpfen, ist in dem Rollenhohlkörper eine Dämpfung ausgebildet. Diese Dämpfung kann nach einer Ausführungsform mehrstückig ausgebildet sein. In diesem Falle ist ein aus dämpfendem Kunststoffmaterial ausgebildeter, an der Innenwandung des Rollenmantels anliegender Ringkörper ausgebildet, der einen Kernraum umgibt. Dieser hohle Kernraum ist mit einem zweiten Material gefüllt, das den Ringkörper gegen die Innenwandung des Rollenmantels drückt.

Mit einer solchen Konstruktion lassen sich die Eigenschwingungen einer Tragrolle und damit die von der Tragrolle ausgehenden Schallemissionen herabsetzen. Allerdings ist die Herstellung einer solchen Tragrolle hinsichtlich der Ausbildung der Dämpfungsschichten relativ schwierig und komplex. Insbesondere sind in der DE 200 03 777 U1 lediglich Lösungen offenbart, die sich nicht auf eine durchgehende Rollenachse aufweisende Tragrollen beziehen. Insbesondere bei Tragrollen, die eine durchgehende Rollenachse aufweisen, besteht aber weiterhin das Bedürfnis, Schallemissionen verursachende Schwingungen durch konstruktive Ausgestaltung der Tragrollen zu mindern und zu dämpfen.

Der Erfindung liegt die Aufgabe zugrunde, eine Lösung zu schaffen, die zu einer kostengünstig zu realisierenden und Schallemissionen deutlich reduzierenden Schwingungsdämpfung an Tragrollen führt.

Bei einer Tragrolle der eingangs näher bezeichneten Art wird diese Aufgabe erfindungsgemäß dadurch gelöst, dass die Dämpfungsschicht ringkörperförmig zweilagig ausgebildet ist und eine innenseitig an der Rollenmantelinnenfläche anliegende erste Lage in Form eines ersten, aus Gummi bestehenden rohrartigen Zylinderkörpers und eine innenseitig an dem ersten Zylinderkörper anliegende zweite Lage in Form eines zweiten, aus Polyamid bestehenden rohrartigen Zylinderkörpers aufweist oder

dass die Dämpfungsschicht ringkörperförmig aus einer Lage armierten, insbesondere gebrauchten, Förderbandgurtmaterials gebildet ist, welches Förderbandgurtmaterial außerhalb der Armierung zumindest im Wesentlichen aus Gummi und/oder Polyamid besteht.

Durch die Erfindung wird eine deutlich reduzierte Schwingungsdämpfung an Tragrollen erreicht. Hierfür wesentlich ist zum einen die zweilagige Ausbildung des Dämpfungsmaterials bzw. der Dämpfungsschicht, wobei mindestens eine Lage aus Gummi oder Polyamid besteht. Bei einer ersten Ausführungsform ist die Dämpfungsschicht zweilagig ausgebildet, wobei dann eine Lage aus Gummi und die andere aus Polyamid besteht. Bei einer dazu alternativen Ausführungsform, bei der die Dämpfungsschicht aus armiertem Förderbandgurtmaterial besteht, ist der die Armierung umgebende Materialbereich aus Gummi und/oder Polyamid, insbesondere aber aus Gummi, gebildet. Sowohl die zweilagige Ausbildung der Dämpfungsschicht mit einer außen liegenden, an der Rollenmantelinnenfläche anliegenden ersten Lage aus Gummi und einer daran innenseitig anliegenden inneren Lage aus Polyamid als auch das vorzugsweise eine Stahlarmierung aufweisende Förderbandgurtmaterial bewirken eine gute Geräuschdämpfung an damit ausgestatteten Tragrollen.

Um die aus zwei getrennt zueinander handhabbaren Lagen bestehende Dämpfungsschicht gemäß erster Alternative gut und besonders kostengünstig in einem von dem Rollenmantel umgebenen Rollenhohlkörper anordnen zu können, sieht die Erfindung in Ausgestaltung vor, dass der erste und der zweite Zylinderkörper jeweils einen durchgehenden Längsmantelschlitz aufweisen. Aufgrund des Längsmantelschlitzes ist es möglich, den jeweiligen Zylinderkörper zusammenzupressen und bezüglich seines Durchmessers zu reduzieren. In dieser Stellung ist er in den Rollenhohlkörper einführbar. Nach vollständiger Einführung werden die den jeweiligen Zylinderkörper zusammenpressenden Kräfte aufgehoben, so dass sich dieser entspannt. Aufgrund der inneren Eigenspannung und seiner entsprechenden Dimensionierung legt sich der jeweilige Zylinderkörper dann an die Innenfläche des ihn umgebenden Körpers an. Auf diese Weise legt sich der aus Gummi bestehende erste Zylinderkörper an die Innenwandfläche des Rollenmantels an und legt sich der zweite Zylinderkörper an die Innenwandfläche des ihn umgebenden ersten Zylinderkörpers an.

Anders als im Stand der Technik angenommen, kommt es für die Erzielung einer guten Dämpfungseigenschaft nicht darauf an, möglichst großflächig poröses oder offenporiges Material, wie beispielsweise Schaumstoff oder Ähnliches, in möglichst großem Maße zu verwenden. Erfindungsgemäß ist vielmehr festgestellt worden, dass eine im Verhältnis zur Polyamidschicht dünnere Gummischicht für die dämpfende Anbindung der Polyamidschicht an den äußeren Rollenmantel aus Stahl ausreichend ist, wohingegen die Polyamidschicht zur Dämpfung der die Schallemissionen erzeugenden Schwingungen, insbesondere Eigenschwingungen, der Tragrolle aus dem gegenüber Gummi härteren Material Polyamid bestehen kann. Die Erfindung zeichnet sich daher in weiterer Ausgestaltung zunächst dadurch aus, dass der zweite Zylinderkörper eine größere Wandstärke als der erste Zylinderkörper aufweist.

Zudem zeichnet sich die Erfindung in Ausgestaltung dadurch aus, dass das Polyamid ein auf Basis Caprolactam erzeugtes Monomer PA6 ist. Dieses Polyamid hat sich als besonders geeignet erwiesen.

Während es bei der Ausführungsform nach der ersten Alternative möglich ist, Zylinderkörper aus Gummi oder Polyamid herzustellen, die dann in zumindest annähernder Zylinderform in das Innere des Rollenhohlkörpers eingeschoben werden, ist dies aus armiertem Förderbandgurtmaterial schwerer zu realisieren. Hier lässt sich eine zylinderartige Innendämpfungsschicht oder Dämpfungsschicht aber gemäß Weiterbildung der Erfindung dadurch relativ einfach handhabbar ausbilden, dass das Förderbandgurtmaterial spiralförmig in Streifenform verlegt und angeordnet ist.

Die spiralförmige Verlegung von in Streifen zurechtgeschnittenem Förderbandgurtmaterial bietet zudem die Möglichkeit, dass ausrangierte, zu entsorgende Förderbandgurte auf diese Weise einer Wiederverwertung zugeführt werden können.

Die Erfindung ist nachstehend anhand der Zeichnung beispielhaft näher erläutert. Diese zeigt in
- Fig. 1: eine Tragrolle mit einer zweilagig ausgebildeten Dämpfungsschicht und in
- Fig. 2: eine Tragrolle mit einer aus armiertem Förderbandgurtmaterial gebildeten Dämpfungsschicht.

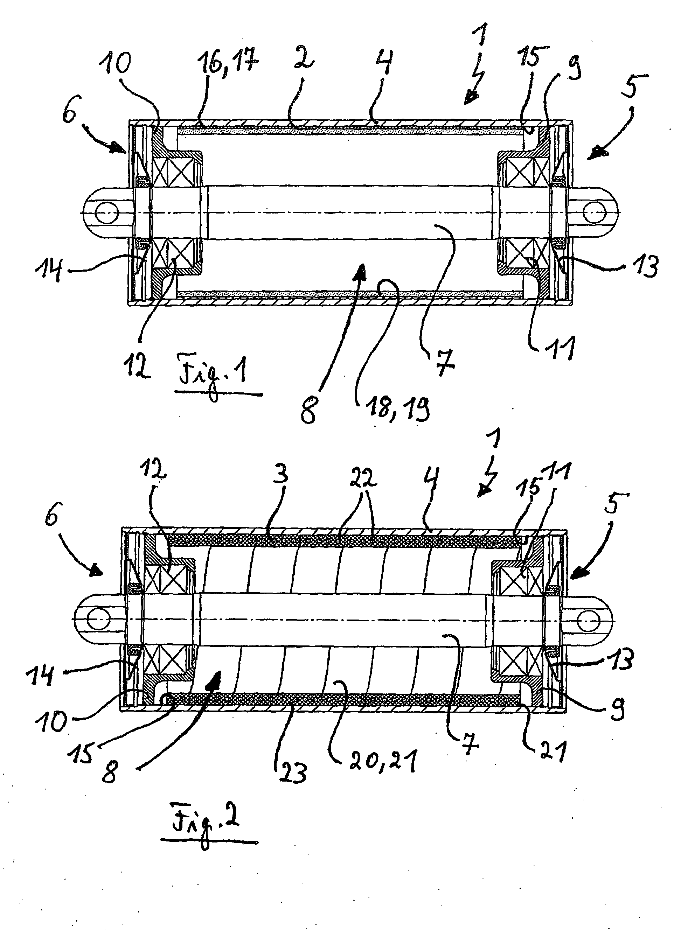

Die in den Figuren 1 und 2 jeweils mit 1 bezeichnete Tragrolle ist mit Ausnahme der Dämpfungsschichten 2, 3 jeweils identisch aufgebaut, so dass in beiden Figuren identische Elemente mit denselben Bezugszeichen versehen sind.

Die Tragrolle 1 besteht aus einem zylinderförmigen Tragrollenmantel 4, der endseitig jeweils mit einer Rollennabe 5, 6 verschlossen ist. Mittels der Rollennaben 5, 6 ist der Tragrollenmantel 4 auf einer den aus Tragrollenmantel 4 und Rollennaben 5, 6 ausgebildeten Rollenhohlkörper 8 durchziehenden Rollenachse 7 gelagert. Zur Ausbildung dieser Lagerung weist jede der beiden Rollennaben 5, 6 einen innenseitig an dem Tragrollenmantel 4 befestigten Lagerhalter 9, 10 auf, welcher jeweils ein Kugellager 11, 12 trägt, über welches der Tragrollenmantel 4 rotierbar an der Rollenachse 7 gelagert ist. Tragrollenaußenseitig ist den Lagerhaltern 9, 10 jeweils ein Wetterschild 13, 14 vorgeordnet.

Innenseitig an der Rollenmantelinnenfläche 15 anliegend ist zwischen den beiden Lagerhaltern 9, 10 im Inneren des Rollenhohlkörpers 8 jeweils eine Dämpfungsschicht 2, 3 ausgebildet.

Die Dämpfungsschicht 2 der Ausführungsform nach der Fig. 1 ist ringkörperförmig und zweilagig ausgebildet. Sie besteht aus einer ersten Lage 16 in Form eines ersten, aus Gummi bestehenden rohrartigen Zylinderkörpers 17. Diese erste Lage 16 liegt innenseitig an der Rollenmantelinnenfläche 15 an. Die zweite Lage 18 der Dämpfungsschicht 2 besteht aus einem zweiten, aus Polyamid bestehenden rohrartigen Zylinderkörper 19, welcher innenseitig an dem ersten Zylinderkörper 17 anliegt. Der zweite Zylinderkörper 19 weist eine größere Wandstärke als der erste Zylinderkörper 17 auf. Bei dem Polyamid, aus welchem der zweite rohrartige Zylinderkörper 19 besteht, handelt es sich um ein auf Basis Caprolactam erzeugtes Monomer PA6.

Sowohl der erste Zylinderkörper 17 als auch der zweite Zylinderkörper 19 weisen einen den Zylindermantel jeweils längs durchtrennenden, durchgehenden Längsmantelschlitz auf, der eine solche Breite aufweist, dass längs dieses Längsmantelschlitzes die dann zueinander beabstandeten Zylindermantelbereiche längs des Längsmantelschlitzes unter Verformung des jeweiligen Zylinderkörpers 17, 19 aufeinander zu bewegbar sind. Dies ermöglicht es, sowohl den ersten Zylinderkörper 17 als auch den zweiten Zylinderkörper 19 von einer Stirnseite des zylinderförmigen Tragrollenmantels 4 her in zusammengepresster, deformierter Form in den Rollenhohlkörper 8 einzuschieben, so dass sich die Zylinderkörper 17, 19 dann nach Positionierung und Nachlassen der Verformungskräfte selbsttätig in ihre in der Fig. 1 dargestellte Anlageposition entspannen. Selbst bereits komplette Tragrollen 1 können nachträglich mit einem ersten und zweiten rohrartigen Zylinderkörper 17, 19 ausgestattet werden, wenn diese ausreichend flexibel genug ausgebildet sind, um durch die von der Rollenachse 7 durchdrungene Öffnung eines Lagerhalters 9, 10 ins Innere des Rollenhohlkörpers 8 eingeschoben zu werden. In diesem Falle ist lediglich zunächst die Rollenachse 7 mit den zugeordneten Kugellagern 11, 12 und den vorgeordneten Wetterschildern 13, 14 zu entfernen.

Die Ausführungsform nach der Fig. 2 unterscheidet sich von der Ausführungsform nach der Fig. 1 ausschließlich dadurch, dass die Dämpfungsschicht nun als Dämpfungsschicht 3 ringkörperförmig aus einem spiralförmig in Streifenform 20 verlegten Förderbandgurtmaterial 21 besteht. Das Förderbandgurtmaterial 21 weist eine Armierung 22 auf, die vollständig vom Basismaterial 23 des Fördergurtmaterials 21 umschlossen ist. Dieses Basismaterial 23 besteht außerhalb der Armierung 22 zumindest im Wesentlichen aus Gummi und/oder Polyamid. Die Armierung 22 kann aus Stahlseilgeflecht, aber auch aus Kunststoffgewebe, beispielsweise Polyestergewebe, oder anderen Gewebebahnen bestehen. Umgeben ist dieses vorzugsweise mit einem Basismaterial 23 aus Gummi.

## Patentansprüche

1. Tragrolle (1) umfassend einen einen Tragrollenmantel (4) mit zwei endseitig angeordneten Rollennaben (5, 6) und einer zwischen diesen innenseitig an der Rollenmantelinnenfläche (15) anliegend angeordneten, hohlzylinderförmigen Dämpfungsschicht (2, 3) aufweisenden Rollenhohlkörper (3),
**dadurch gekennzeichnet,**
**dass** die Dämpfungsschicht (2) ringkörperförmig zweilagig ausgebildet ist und eine innenseitig an der Rollenmantelinnenfläche (15) anliegende erste Lage (16) in Form eines ersten, aus Gummi bestehenden rohrartigen Zylinderkörpers (17) und eine innenseitig an dem ersten Zylinderkörper (16) anliegende zweite Lage (18) in Form eines zweiten, aus Polyamid bestehenden rohrartigen Zylinderkörpers (19) aufweist
oder
**dass** die Dämpfungsschicht (3) ringkörperförmig aus einer Lage armierten, insbesondere gebrauchten, Förderbandgurtmaterials (21) gebildet ist, welches Förderbandgurtmaterial (21) außerhalb der Armierung (22) zumindest im Wesentlichen aus Gummi und/oder Polyamid besteht.

2. Tragrolle (1) nach Anspruch 1, **dadurch gekennzeichnet, dass** der erste und der zweite Zylinderkörper (17, 19) jeweils einen durchgehenden Längsmantelschlitz aufweisen.

3. Tragrolle (1) nach Anspruch 1 oder 2, **dadurch gekennzeichnet, dass** der zweite Zylinderkörper (19) eine größere Wandstärke als der erste Zylinderkörper (17) aufweist.

4. Tragrolle (1) nach einem der vorhergehenden Ansprüche, **dadurch gekennzeichnet, dass** das Polyamid ein auf Basis Caprolactam erzeugtes Monomer PA6 ist.

5. Tragrolle (1) nach Anspruch 1, **dadurch gekennzeichnet, dass** das Förderbandgurtmaterial (21) spiralförmig in Streifenform (20) verlegt und angeordnet ist.

## Claims

1. Carrier roller (1) comprising a carrier roller sleeve (4) having two roller hubs (5, 6) arranged at the ends and a hollow roller body (3) which is arranged therebetween adjoining the inner surface (15) of the roller sleeve on the inside and has a hollow cylindrical damping coat (2, 3),
**characterised in that**
the damping coat (2) is formed as a double-layer annular body and has a first layer (16) adjoining the inner surface (15) of the roller sleeve on the inside in the form of a first tubular rubber cylindrical body (17) and a second layer (18) adjoining the first cylindrical body (16) on the inside in the form of a second polyamide tubular cylindrical body (19),
or
**in that** the damping coat (3) is formed as an annular body from a layer of reinforced, in particular recycled, conveyor belt material (21), which conveyor belt material (21) consists at least substantially of rubber and/or polyamide outside the reinforcement (22).

2. Carrier roller (1) according to claim 1, **characterised in that** the first and the second cylindrical bodies (17, 19) each have a continuous longitudinal sleeve slit.

3. Carrier roller (1) according to either claim 1 or claim 2, **characterised in that** the second cylindrical body (19) has a greater wall thickness than the first cylindrical body (17).

4. Carrier roller (1) according to any of the preceding claims, **characterised in that** the polyamide is a PA6 monomer produced based on caprolactam.

5. Carrier roller (1) according to claim 1, **characterised in that** the conveyor belt material (21) is laid and arranged helically in the form of strips (20).

## Revendications

1. Galet de support (1) comprenant un corps creux de galet (3) comprenant une enveloppe de galet de support (4) avec deux moyeux de galets (5, 6) disposés au niveau des extrémités et une couche d'amortissement (2, 3) en forme de cylindre creux, disposée entre ceux-ci à l'intérieur sur la surface interne de l'enveloppe du galet (15),
**caractérisé en ce que**
la couche d'amortissement (2) est constituée de deux couches sous la forme d'un corps annulaire et comprend une première couche (16) s'appuyant à l'intérieur contre la surface interne de l'enveloppe du galet (15), sous la forme d'un premier corps cylindrique (17) de forme tubulaire constitué de caoutchouc et une deuxième couche (18) s'appuyant à l'intérieur contre le premier corps cylindrique (16), sous la forme d'un deuxième corps cylindrique (19) de forme tubulaire en polyamide,
ou
**en ce que** la couche d'amortissement (3) présente la forme d'un corps annulaire et est constituée d'un matériau de courroie de convoyeur (21) avec une couche armée, plus particulièrement usée, ce matériau de courroie de convoyeur (21) étant constitué, hors de l'armature (22), au moins globalement de caoutchouc et/ou de polyamide.

2. Galet de support (1) selon la revendication 1, **caractérisé en ce que** le premier et le deuxième corps cylindrique (17, 19) comprennent chacun une fente longitudinale d'enveloppe traversante.

3. Galet de support (1) selon la revendication 1 ou 2, **caractérisé en ce que** le deuxième corps cylindrique (19) comprend une épaisseur de paroi supérieure à celle du premier corps cylindrique (17).

4. Galet de support (1) selon l'une des revendications précédentes, **caractérisé en ce que** le polyamide est un monomère PA6 produit sur la base de caprolactame.

5. Galet de support (1) selon la revendication 1, **caractérisé en ce que** le matériau de courroie de convoyeur (21) est posé et disposé en spirale sous la forme de bandes (20).
